# EUROPÄISCHE PATENTSCHRIFT

(11) **EP 1 573 645 B1**
(45) Veröffentlichungstag und Bekanntmachung des Hinweises auf die Patenterteilung: **17.02.2010**
(21) Anmeldenummer: 03788862.5
(22) Anmeldetag: 08.12.2003
(51) Int. Cl.: G06K 7/00, H04L 27/02, H04L 27/04

(54) **VERFAHREN ZUR KONTAKTLOSEN DATENÜBERTRAGUNG UND VERWENDUNG DIESES VERFAHRENS**
CONTACTLESS DATA TRANSMISSION METHOD AND USE THEREOF
PROCEDE DE TRANSMISSION DE DONNEES SANS CONTACT ET UTILISATION DUDIT PROCEDE

(30) Priorität: 16.12.2002 DE 10258779
(43) Veröffentlichungstag der Anmeldung: 14.09.2005
(73) Patentinhaber: RF-IT Solutions GmbH, 8020 Graz (AT)
(72) Erfinder: BERGER, Dominik, 8046 Graz (AT)
(74) Vertreter: Epping - Hermann - Fischer
(86) Internationale Anmeldenummer: PCT/DE2003/004029
(87) Internationale Veröffentlichungsnummer: WO 2004/055712

(56) Entgegenhaltungen:
- DE-A- 19 634 486
- DE-A- 19 839 802

## Beschreibung

Die Erfindung betrifft ein Verfahren zur kontaktlosen Datenübertragung bzw. die Verwendung dieses Verfahrens gemäß dem Oberbegriff des Patentanspruchs 1.

Sogenannte "RFID"-Systeme (Radio frequency identification) erlangen eine immer weitere Verbreitung. Sie bestehen grundsätzlich aus zwei Komponenten, nämlich einem "Transponder" und einem Erfassungs- bzw. Schreib-/Lesegerät. Der Transponder ist mit einem Gegenstand verhaftet, der identifiziert werden soll, wobei das Erfassungsgerät diese Identifizierung auf kontaktlosem Wege vornimmt. Das Lesegerät beinhaltet typischerweise ein Hochfrequenzmodul (Sender und Empfänger), eine Kontrolleinheit sowie ein Koppelelement zum Transponder. Daneben sind viele Lesegeräte mit einer zusätzlichen Schnittstelle wie beispielsweise RS232 o. Ä. ausgestattet, um die erhaltenen Daten an ein anderes System wie beispielsweise einen PC oder eine Automatensteuerung weiter zu führen. Der Transponder, der den eigentlichen Datenträger eines RFID-Systems darstellt, besteht üblicherweise aus einem Koppelelement sowie aus einem elektronischen Bauelement, einem sogenannten Chip.

Außerhalb des Ansprechbereiches eines Lesegeräts verhält sich der Transponder, der in der Regel keine eigene Spannungsversorgung besitzt, vollkommen passiv. Die zum Betrieb des Transponders benötigte Energie wird ebenso wie Takt und Daten durch die Koppeleinheit kontaktlos zum Transponder übertragen.

Wie in der drahtlosen Datenübertragung üblich, wird auch bei einem RFID-System ein hochfrequentes.Signal mit den zu übertragenden Daten moduliert. Ein derartiges Verfahren ist beispielsweise durch DE 19634486 oder in "Finkenzeller, Klaus; RFID-Handbuch, 2. Auflage 2000, Karl-Hansa-Verlag München, Kapitel 2 und 6" beschrieben. Die übliche ASK-Modulation erfolgt in der Form, daß die Modulation derart einsetzt, daß die Signalamplitude vermindert wird. Je nachdem, welcher Modulationsgrad gewählt ist, erfolgt die Verminderung. Bei ASK 100 beispielsweise wird zum Zeitpunkt der Modulation kein hochfrequentes Signal übertragen.

Obwohl diese Modulationslücken nur sehr kurz sind, bedeutet dies doch einen erheblichen Schaltungsaufwand. Da der Chip seine Energie aus dem empfangenen Feld bezieht, liegt in den Modulationszeiträumen für ihn ein Energiemangel vor. Dieser muß entsprechend gepuffert werden.

Der Erfindung liegt somit die Aufgabe zugrunde, ein Verfahren zur kontaktlosen Datenübertragung vorzusehen, bei dem in einem RFID-System der Transponder keinen zusätzlichen Aufwand benötigt, um Modulationslücken zu überbrücken.

Diese Aufgabe wird erfindungsgemäß mit den in kennzeichnenden Teil des Patentanspruchs 1 angegebenen Maßnahmen gelöst. Dadurch, daß das modulierte Signal keine Modulationslücke, sondern eine Pegelerhöhung erzeugt, liegt für den Transponder auch zu Modulationszeitpunkten die gleiche Energie zur Verfügung wie zu Zeitpunkten, in denen nicht moduliert wird.

Weitere vorteilhafte Ausgestaltungen sind in den untergeordneten Ansprüchen angegeben.

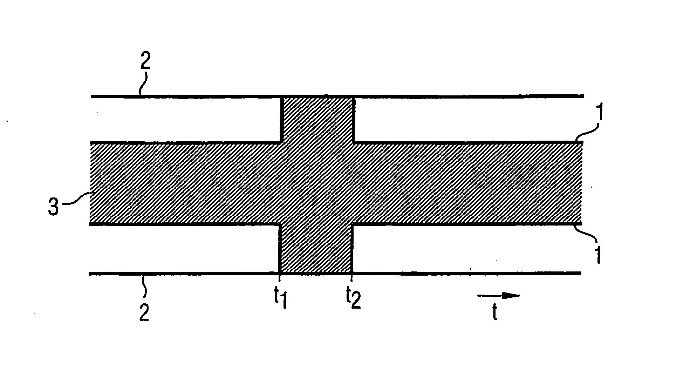

Nachfolgend wird die Erfindung unter Bezugnahme auf die Figur erläutert. In der Figur ist ein hochfrequentes Signal 3 dargestellt, dessen Signalverlauf von links nach rechts erfolgt. Zunächst schwingt dieses hochfrequente Signal 3 zwischen den beiden Signalpegeln 1. Zum Zeitpunkt t1 erfolgt eine Modulation. Der Signalpegel des hochfrequenten Signals nimmt ab dem Zeitpunkt t1 einen erhöhten Signalpegel 2 ein und geht zum Zeitpunkt t2 wieder auf den ersten Signalpegel zurück. Zu diesem Zeitpunkt ist die Modulation beendet.

Man erkennt, daß ein Transponder, der das hochfrequente Signal 3 empfängt, auch im Zeitintervall zwischen den Zeitpunkten t1 und t2 dem Signal 3 die Energie entnehmen kann, die ihm vor dem Zeitpunkt t1 und nach dem Zeitpunkt t2 zur Verfügung steht.

### Bezugszeichenliste

1 Signalpegel des unmodulierten Signals
2 Signalpegel des modulierten Signals
3 hochfrequentes Signal

## Patentansprüche

1. Verfahren zur kontaktlosen Datenübertragung zwischen einem Schreib-/Lesegerät und einem von diesem Lesegerät getriebenen Transponder, bei dem ein vom Schreib-/Lesegerät abgegebenes unmoduliertes Signal einen ersten Pegel und ein vom Schreib-/Lesegerät abgegebenes moduliertes Signal einen zweiten Pegel aufweist, **dadurch gekennzeichnet, daß** der zweite Pegel betragsmäßig größer als der erste Pegel ist, und die Spannungsversorgung des Transponders allein auf das unmodulierte Signal ausgelegt ist.

2. Verfahren nach Anspruch 1,
**dadurch gekennzeichnet, daß**
der Betrag des zweiten Pegels den ersten Pegel um 10 Prozent übersteigt.

## Claims

1. A method for the contactless data transfer between a read/write device and a transponder driven by said read device, in which an unmodulated signal emitted by the read/write device has a first level and a modulated signal emitted by the read/write device has a second level,
**characterized in that**
the second level has a greater value than the first level, and the voltage supply of the transponder is designed solely for the unmodulated signal.

2. The method according to Claim 1,
**characterized in that**
the value of the second level exceeds the first level by 10 percent.

## Revendications

1. Procédé pour la transmission sans contact de données entre un appareil d'écriture/de lecture et un transpondeur commandé par ledit appareil de lecture, dans lequel un signal non-modulé délivré par ledit appareil d'écriture/de lecture présente un premier niveau et un signal modulé délivré par ledit appareil d'écriture/de lecture présente un second niveau,
**caractérisé en ce que**
le second niveau est, en valeur, supérieur au premier niveau, et que l'alimentation en tension du transpondeur est dimensionnée exclusivement pour le signal non-modulé.

2. Procédé selon la revendication 1,
**caractérisé en ce que**
la valeur du second niveau est supérieure de 10 pour cent à la valeur du premier niveau.
